# EUROPÄISCHE PATENTSCHRIFT

(11) **EP 1 273 469 B1**
(45) Veröffentlichungstag und Bekanntmachung des Hinweises auf die Patenterteilung: **02.01.2008**
(21) Anmeldenummer: 02014533.0
(22) Anmeldetag: 01.07.2002
(51) Int. Cl.: B60J 7/00, B60J 7/16, B60J 7/02

(54) **Öffnungsfähiges Fahrzeugdach mit verbessertem Schiebehimmelführungselement**
Open roof for vehicle with improved guiding element for the sliding headliner
Toit ouvrant pour véhicule avec système de guidage amelioré pour le plafond coulissant

(30) Priorität: 04.07.2001 DE 10131885
(43) Veröffentlichungstag der Anmeldung: 08.01.2003
(73) Patentinhaber: Webasto AG, 82131 Stockdorf (DE)
(72) Erfinder: Wimmer, Ingrid, 82131 Gauting (DE); Kiedl, Martin, 80992 München (DE)
(74) Vertreter: Konnerth, Dieter Hans

(56) Entgegenhaltungen:
- DE-A- 19 858 676
- DE-U- 8 107 603

## Beschreibung

Die vorliegende Erfindung bezieht sich auf ein öffnungsfähiges Fahrzeugdach, etwa für einen PKW oder ein Wohnmobil oder auch einen Wohnanhänger, gemäß dem in der DE 19 858 676 A offenbarten Oberbegriff des Patentanspruchs 1.

Öffnungsfähige Fahrzeugdächer sind in den verschiedensten Ausführungsformen bekannt. In der Regel werden sie bei PKW eingesetzt, um die Belüftung des PKW-Innenraums zu verbessern. Dazu weisen öffnungsfähige Fahrzeugdächer generell einen Deckel auf, der eine Öffnung in dem Fahrzeugdach verschließen kann und aus dieser Deckelschließposition in eine Deckelausstellposition ausgestellt werden kann. In der Deckelausstellposition ist der Deckel gegenüber dem Fahrzeugdach an zumindest einer Seitenkante angehoben, so daß ein Lüftungsschlitz gebildet wird. Optional sind derartige Deckel meist zusätzlich über oder unter dem festen Dach nach hinten verschiebbar.

Die Erfindung betrifft dabei ein öffnungsfähiges Fahrzeugdach mit einem Schiebehimmel, der den Deckel, beispielsweise einen transparenten Glasdeckel, in der Deckelschließposition zu dem Fahrzeuginnenraum hin abdecken kann und zudem dem Deckel in gewissem Umfang in die Deckelausstellposition folgen kann, also seinerseits in eine Schiebehimmelausstellposition mitbewegt werden kann.

Dadurch geben dann Deckel und Schiebehimmel gemeinsam einen Lüftungsschlitz frei.

Außerdem kann der Schiebehimmel, wie seine Bezeichnung bereits andeutet, aus der Schiebehimmelschließposition in dachparalleler Richtung seitlich in eine Schiebehimmelöffnungsposition verschoben werden, so daß der Deckel bzw. zumindest ein großer Teil des Deckels, von dem Schiebehimmel freigegeben wird. Dadurch läßt sich vom Fahrzeuginnenraum aus beispielsweise durch einen gläsernen Deckel die Umgebung betrachten und es verbessern sich die Lichtverhältnisse im Fahrzeuginnenraum.

Aus der DE 198 58 676 A1 ist ein öffnungsfähiges Fahrzeugdach bekannt, bei dem der Schiebehimmel hinsichtlich seiner Bewegung zwischen der Schiebehimmelschließposition und der Schiebehimmelöffnungsposition mit Hilfe eines langgestreckten Führungselements gehalten und geführt ist, entlang dem er verschiebbar ist. Die Besonderheit dieses öffnungsfähigen Fahrzeugdaches liegt daran, daß ein Teil des Führungselements bei der Bewegung des Schiebehimmels zwischen der Schiebehimmelausstellposition und der Schiebehimmelschließposition mitbewegt wird. Dabei handelt es sich um das Ende des Führungselements, das der auszustellenden Seite des Schiebehimmels und des Deckels zugeordnet ist. In einem von diesem Ende entfernten Bereich ist das Führungselement in bezüglich des Daches senkrechter Richtung unbeweglich gehalten. Die Beweglichkeit des Führungselements hat den Zweck, bei ausgestelltem Deckel eine Bewegung des Schiebehimmels zwischen der Schiebehimmelöffnungsposition und der Schiebehimmelausstellposition zu ermöglichen. Das Führungselement erfüllt seine Aufgabe also nicht nur bei geschlossenem Deckel, sondern auch im ausgestellten Zustand. Diese zusätzlichen Möglichkeiten haben sich in der Praxis bewährt und werden von den Benutzern gut angenommen. Die Lüftungsfunktion ist bei diesem öffnungsfähigen Fahrzeugdach gegenüber alternativen Ausführungsformen verbessert, bei denen der Schiebehimmel zur Herstellung eines Lüftungsschlitzes bei ausgestelltem Deckel ein Stück weit dachparallel verschoben werden muß oder für Lüftungszwecke eingebaute Lüftungsschlitze aufweist. Außerdem können die Fahrzeuginsassen die Ausstellposition des Deckels visuell besser wahrnehmen.

Der Erfindung liegt die Aufgabe zugrunde, ein im Oberbegriff des Anspruchs 1 angegebenes öffnungsfähiges Fahrzeugdach im Hinblick auf die Führung des Schiebehimmels zu verbessern.

Diese Aufgabe wird durch ein öffnungsfähiges Fahrzeugdach mit den Merkmalen des Anspruchs 1 gelöst. Vorteilhafte Ausgestaltungen der Erfindung sind den Unteransprüchen zu entnehmen.

Die Erfindung besteht hierbei insbesondere darin, daß das Führungselement zumindest in einem Übergangsbereich zwischen einem unbeweglich gehaltenen Bereich und einem beweglichen Ende flexibel ist.

Die Besonderheit des öffnungsfähigen Fahrzeugdaches besteht also darin, daß anstelle des bekannten mehrteiligen und zwischen diesen Teilen gelenkig ausgeführten Führungselements nun ein in dem Bereich zwischen dem (senkrecht zum Dach) unbeweglichen Bereich des Führungselements und dem beweglichen Ende flexibles, also biegbares, Führungselement verwendet wird. Durch die Flexibilität dieses Führungselementbereichs können die Gelenke des bekannten Führungselements ersetzt werden. Dadurch vereinfacht sich der Aufbau des Führungselements und somit auch des gesamten öffnungsfähigen Fahrzeugdaches mit entsprechenden damit verbundenen Kostenvorteilen. Zudem sind Gelenke im Hinblick auf Schmierung und Verschmutzungsempfindlichkeit wartungsbedürftige Bauteile, was für einen flexiblen Führungselementbereich bei geeigneter Materialwahl nicht gilt.

In Bezug auf den Wortlaut des Anspruchs 1 ist klarzustellen, daß sich der Begriff des "großen Teils", der durch den in die Schiebehimmelöffnungsposition bewegten Schiebehimmel freigegeben werden kann, auf das Format eines Schiebehimmels bzw. eines Deckels bezieht. Bei öffnungsfähigen Fahrzeugdächern mit mehreren kombinierten Deckeln kann dies u.U. weniger als der größte Teil der Dachöffnung sein. Es sind auch öffnungsfähige Fahrzeugdächer denkbar, bei denen mehrere Schiebehimmel vorgesehen sind, wobei die vorstehenden Aussagen für einen der Schiebehimmel, vorzugsweise für alle Schiebehimmel gelten. Auch dann bezieht sich der Begriff "großen Teils" auf das Format des einzelnen Schiebehimmelteils.

In der Regel sind öffnungsfähige Fahrzeugdächer so aufgebaut, daß der Deckel an genau einer Seite gegenüber dem Dach angehoben werden kann und an der gegenüberliegenden Seite im wesentlichen auf Dachniveau liegen bleibt. Dabei soll der Schiebehimmel an der der auszustellenden Seite des Deckels zugeordneten Seite ausgestellt werden. Die Erfindung bezieht sich jedoch auch auf andere Varianten, etwa auf mit allen Seiten ausstellbare Deckel. Die erfindungsgemäße Führungselementkonstruktion muß dabei an zumindest einer Seite des Schiebehimmels vorgesehen sein.

Die Bewegungen des Deckels und des Schiebehimmels können von Hand oder motorisch erfolgen. Hierauf wird nicht näher eingegangen, weil die verschiedenen in Frage kommenden Varianten und Antriebstechniken dem Fachmann vertraut sind und mit der Erfindung in keiner engen Beziehung stehen. Bevorzugt ist jedoch, daß die Bewegung des Schiebehimmels aus der Schiebehimmelschließposition in die -ausstellposition durch die entsprechende Bewegung des Deckels erfolgt, der Schiebehimmel also mit dem Deckel mitgenommen wird. Dies gilt natürlich nur für die Situation, in der der Schiebehimmel zuvor in der Schiebehimmelschließposition war. Wenn er zuvor in der Schiebehimmelöffnungsposition war, so ist er vorzugsweise von der Bewegung des Deckels in die Ausstellposition entkoppelt.

Ein wesentlicher Vorteil der Erfindung besteht darin, daß sich durch die flexible Ausführung des Übergangsbereichs zwischen (senkrecht zum Dach) unbeweglichem Bereich des Führungselements und dem beweglichen Ende eine einstückige Ausführung des Führungselements erreichen läßt. Dadurch kann das Führungselement besonders einfach und montagegünstig aufgebaut sein. Zumindest der Bereich des Führungselements, in dem die den Schiebehimmel an dem Führungselement haltende Halterung verschoben werden kann, ist vorzugsweise einstückig ausgeführt. Dies hat den Vorteil einer weitgehenden Vermeidung von Geräuschen bei den Bewegungsabläufen, mit denen sich die verschiebbare Halterung entlang dem Führungselement bewegt, und zwar insbesondere von diskontinuierlichen Geräuschen. Solche Geräusche sind bei mehrteiligen Führungselementen und Übergängen zwischen den Teilen kaum zu vermeiden und erwecken beim Benutzer den Eindruck, daß das Dach "klappert" und möglicherweise ein Defekt oder zumindest lose Teile zu befürchten sind. Demgegenüber stören die bei Verschiebungen möglicherweise auftretenden Schleif- oder Rollgeräusche weniger. An dieser Stelle ist anzumerken, daß die verschiebbare Halterung entlang dem Führungselement auch durch ein Abrollen verschiebbar sein könnte, im einfacheren und bevorzugten Fall jedoch gleitet.

Die Führung des Schiebehimmels über die erwähnte verschiebbare Halterung an dem Führungselement kann hinsichtlich der Formgestaltung der beteiligten Elemente in unterschiedlichster Weise gelöst werden. Bevorzugt ist bei dieser Erfindung jedoch, daß das Führungselement ein balliges Querschnittsprofil aufweist. Dabei umfasst der Begriff "ballig" auch polygonale eckige Profile und auch Teile im übrigen nicht balliger Profile wie etwa den Querbalken bei einem T-Profil. Dieses Profil kann von einer geeigneten Halterung umgriffen werden, so daß diese entlang des Profils verschoben werden kann. Im einfachsten Fall handelt es sich um ein zumindest teilweise kreisförmiges Querschnittsprofil. Ein konkaves Querschnittsprofil des Führungselements ist allerdings auch möglich. Jedenfalls muß eine Führung in den zu der Verschieberichtung senkrechten Richtungen gegeben sein.

Ferner ist das Führungselement jedenfalls in dem flexiblen Übergangsbereich vorzugsweise als flexible Metallstange ausgestaltet (die im einfachsten Fall das erwähnte ballige Querschnittsprofil aufweist).

Das bewegbare Ende des Führungselements kann versteift sein, so daß die flexiblen Eigenschaften, die etwa infolge einer einstückigen Ausführung mit dem flexiblen Übergangsbereich sonst vorhanden wären, durch die Versteifung aufgehoben werden. Dadurch kann eine fest vorgegebene Form des bewegbaren Endes definiert werden, die bei den verschiedenen Bewegungsabläufen erhalten bleibt. Beispielsweise kann eine gerade Form des bewegbaren Endes über eine bestimmte Strecke vorgegeben werden, die in der Schiebehimmel-Ausstellposition so schräg steht, daß sie den Anstieg der betreffenden Seite des Schiebehimmels in die Schiebehimmel-Ausstellposition vorgibt, wenn diese aus der Schiebehimmel-Öffnungsposition dorthin verschoben wird. Der Übergang von dieser schrägstehenden geraden Strecke in einen im übrigen im wesentlichen zum Fahrzeugdach parallel laufenden Bereich des Führungselements kann dann durch den flexiblen Übergangsbereich bewerkstelligt sein.

Beispielsweise kann die erwähnte Metallstange als Walzprofil hergestellt werden, das neben einem balligen, für sich genommen flexiblen Querschnittsprofilanteil einen weiteren versteifenden Querschnittsprofilanteil aufweist, etwa ein seitliches "Fähnchen". Der versteifende Querschnittsprofilanteil kann dann durch Freistanzen oder anderweitig an bestimmten Stellen entfernt werden, um eine Trennung zwischen dem flexiblen Übergangsbereich und dem erwähnten versteiften Abschnitt des bewegbaren Endes herzustellen. Der versteifende Querschnittsprofilanteil kann beispielsweise auch zur Befestigung des unbeweglichen Abschnitts des Führungselements dienen.

Zur Verbesserung der Gleiteigenschaften kann das Führungselement mit einer Kunststoffbeschichtung versehen sein. Dabei kann die Kunststoffbeschichtung auch zur Versteifung beitragen. Der Kunststoff kann an das Führungselement angespritzt sein. Der Kunststoff kann auch ausschließlich für die Führungseigenschaften verantwortlich sein, während ein Metallteil oder Metallkern, etwa eine Blattfeder, lediglich zur Festlegung der flexiblen Eigenschaften beiträgt.

Bei der bereits erwähnten Variante, bei der der Deckel in eine Deckel-Öffnungsposition bewegbar ist, ist in der Regel erwünscht, daß der Schiebehimmel bei der Bewegung des Deckels in die Deckel-Öffnungsposition mitgenommen wird. Dies kann bei der vorliegenden Erfindung vorzugsweise dadurch geschehen, daß der Deckel über einen Mitnehmer mit dem Führungselement verbunden ist, der auf der dem bewegbaren Ende zugewandten Seite der verschiebbaren Halterung des Schiebehimmels liegt, so daß er bei einer Bewegung des Deckels in Richtung zu der Deckel-Öffnungsposition an diese Halterung anschlägt und dadurch den Schiebehimmel in diese Richtung mitnimmt. Der Schiebehimmel sollte dabei soweit mitgenommen werden, daß er im wesentlichen den durch den Deckel geöffneten Teil der Dachöffnung freigibt.

Die Bewegung des Deckels von der Deckel-Schließposition in die Deckel-Ausstellposition soll ebenfalls vorzugsweise den Schiebehimmel in die SchiebehimmelAusstellposition mitnehmen, wenn er zuvor in der Schiebehimmel-Schließposition war. Dazu kann vorgesehen sein, daß der erwähnte Mitnehmer so mit dem Deckel bzw. einer Einrichtung zum Ausstellen des Deckels gekoppelt ist, daß er bei der Bewegung in die Deckel-Ausstellposition das bewegliche Ende des Führungselements mitnimmt und dadurch, d.h. über die erwähnte verschiebbare Halterung des Schiebehimmels, auch den Schiebehimmel.

Eine Möglichkeit besteht darin, daß der Mitnehmer an einem Steuerhebel einer an sich bekannten Wasserrinne angebracht oder mit diesem gekoppelt ist, der mit der Ausstellbewegung des Deckels gekoppelt ist.

Schon in Verbindung mit der erwähnten Einstückigkeit des Führungselements in dem von der Halterung erfaßbaren Bereich wurde erläutert, daß Geräuscharmut ein wesentliches Gütemerkmal des erfindungsgemäßen Ausstelldaches sein kann. Ein weiterer Aspekt der Geräuscharmut betrifft das bewegliche Ende des Führungselements, und zwar in solchen Situationen, in denen dieses nicht anderweitig gehalten wird. Beispielsweise wird es bei den zuvor erläuterten Varianten durch den mit dem Deckel gekoppelten Mitnehmer gehalten, wenn sich der Deckel in der Deckel-Ausstellposition oder der Deckel-Schließposition befindet. Wenn er sich jedoch in der Deckel-Öffnungsposition befindet, ist der Mitnehmer entlang dem Führungselement von dem beweglichen Ende weg verschoben, so daß dieses Klappergeräusche verursachen könnte, wenn es frei beweglich bleibt. Hier ist vorzugsweise vorgesehen, eine Halteeinrichtung für das Führungselement anzubringen, die eine zu Geräuschen führende freie Beweglichkeit unterbindet. Dies kann beispielsweise ein Magnet sein, der einen magnetischen Teil des beweglichen Endes des Führungselements halten kann. Dadurch kann der Mitnehmer das bewegliche Ende auch ohne weiteres lösen, wenn dieses in die Ausstellposition mitgenommen werden soll.

Im folgenden wird ein konkretes Ausführungsbeispiel der Erfindung anhand der Zeichnung näher erläutert. Es zeigt:
- Fig. 1: eine Teilansicht eines Fahrzeugdaches in perspektivischer Ansicht, wobei der Deckel weggelassen ist, in der Deckel-Schließposition und der Schiebehimmel-Schließposition;
- Fig. 2: eine Teilansicht analog zur Fig. 1 in der Deckel-Ausstellposition und der Schiebehimmel-Ausstellposition;
- Fig. 3: eine Teilansicht analog zur Fig. 1 in der Deckel-Ausstellposition und mit einem ein Stück weit in Richtung zur Schiebehimmel-Öffnungsposition zurückgeschobenen Schiebehimmel;
- Fig. 4: eine Teilansicht analog zur Fig. 1 in einer Situation, in der der Deckel ein Stück weit in Richtung Deckelöffnungsposition und der Schiebehimmel ein Stück weit in Richtung Schiebehimmelöffnungsposition verschoben ist; und
- Fig. 5: einen Teil-Längsschnitt durch den hinteren Teil des Fahrzeugdachs in einer Position gemäß Fig. 2.

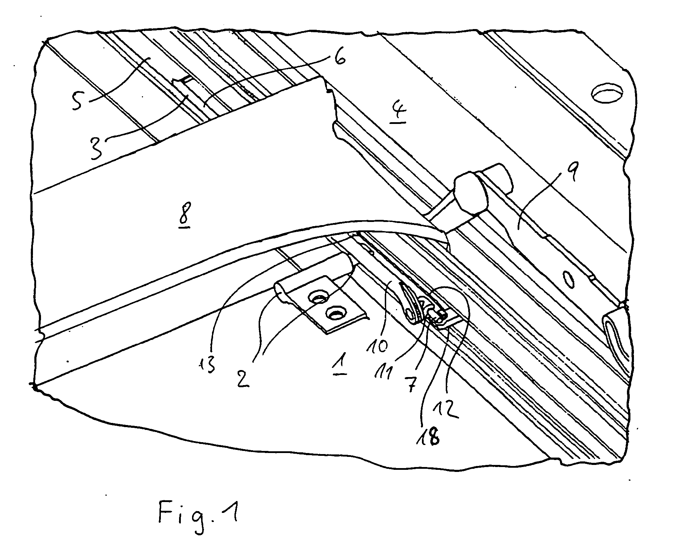

Die Figur 1 zeigt die Position der für die Erfindung wesentlichen Teile bei geschlossenem Deckel 14 und geschlossenem Schiebehimmel 1. Dabei ist der Schiebehimmel 1 im Bereich seiner Hinterkante über eine Halterung 2 an einem langgestreckten, schienenartigen Führungselement 3 verschiebbar gehalten, das im Ausführungsbeispiel als eine mit Kunststoff beschichtete Metallstange ausgebildet. Das Führungselement 3 weist einen relativ zum Fahrzeugdach 17 fest montierten Abschnitt 5 auf. An diesen schließt sich ein flexibler Abschnitt 6 an sowie ein bewegliches Ende 7.

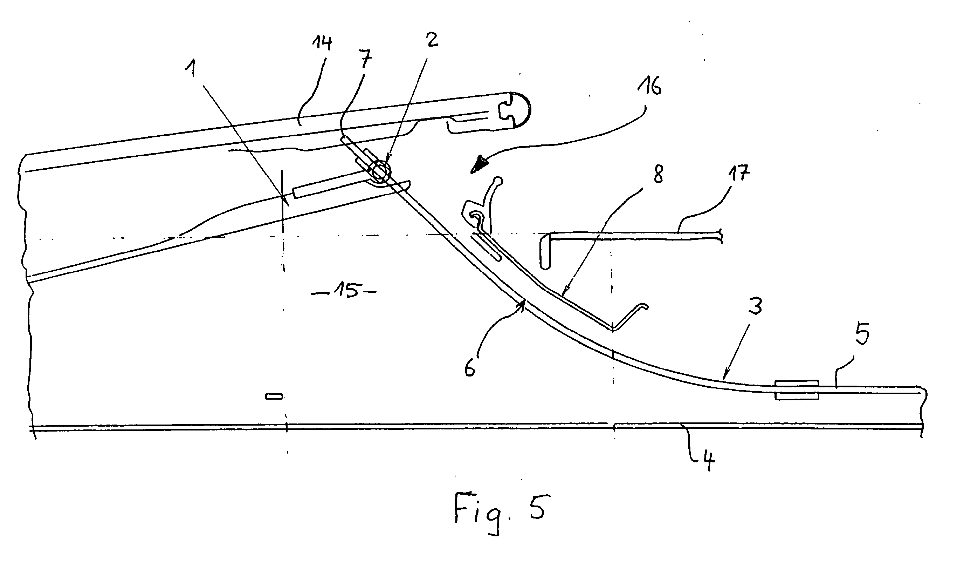

Der Deckel 14 des öffnungsfähigen Fahrzeudaches ist nur in Fig. 5 dargestellt, weil er in den übrigen Figuren die gezeichneten Elemente fast vollständig verdekken würde. Dem Deckel 14 ist eine Wasserrinne 8 zugeordnet, die eventuell in einen durch die ausgestellte Hinterkante des Deckels 14 freigegebenen Lüftungsspalt 16 eindringendes Wasser auffangen und in seitliche Wasserrinnen am Rahmen ableiten kann. Die Wasserrinne 8 bewegt sich mit dem Deckel 14 in dessen verschiedene Positionen. Die Bewegungen des Deckels 14 werden von einem über eine in Figur 1 am rechten Rand ansatzweise erkennbare Kulissensteuerung angetriebenen Hebelgestänge 9 gesteuert, das bekannt und für die Erfindung nicht wesentlich ist.

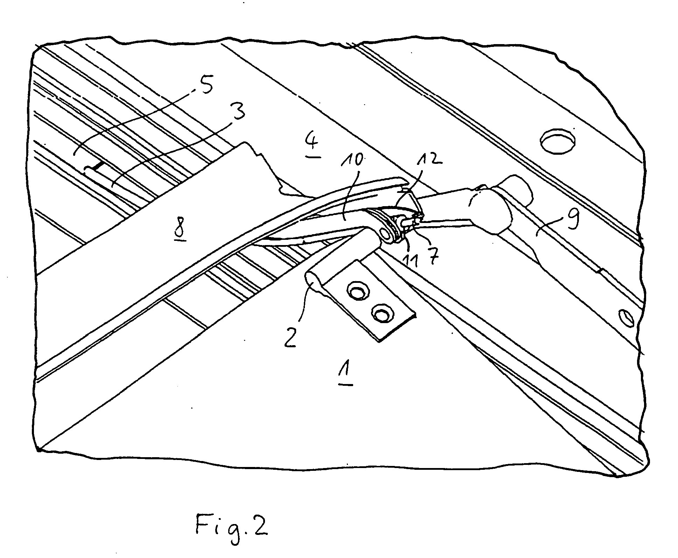

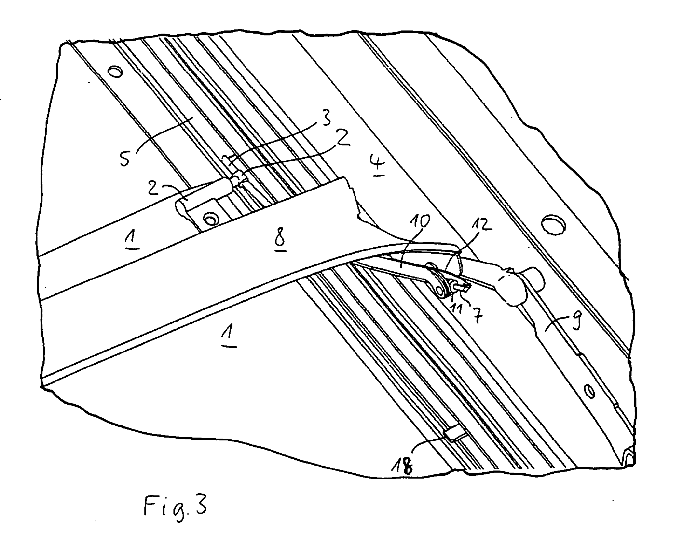

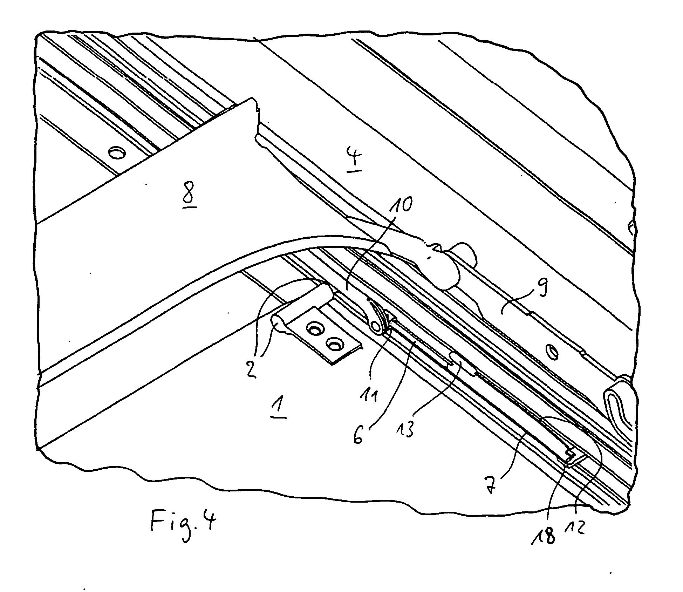

An der Wasserrinne 8 ist ein Steuerhebel 10 befestigt, der die durch die Hebelmechanik 9 angetriebenen Bewegungen der Wasserrinne 8 mitmacht. An dem von der Wasserrinne entfernten Ende des Steuerhebels 10 ist ein Mitnehmer 11 um eine horizontale Achse beweglich gehalten. Durch die Bewegung der Wasserrinne 8 wird über den Steuerhebel 10 und den Mitnehmer 11 das bewegbare Ende 7 des Führungselements 3 bei der Bewegung in die Ausstellposition des Dekkels 14 mitgenommen, wie insbesondere aus den Fign. 2 und 3 erkennbar ist. Dabei bleibt der Mitnehmer 11 im äußersten Bereich des bewegbaren Endes 7 des Führungselements 3. Daher kann die ebenfalls an dem Führungselement 3 verschiebbar geführte Halterung 2 des Schiebehimmels 1 mit dem Schiebehimmel 1 entlang des Führungselements 3 verschoben werden, bis die Halterung 2 an den Mitnehmer 11 anschlägt (was in Fig. 2 der Fall ist). Dabei bildet das Führungselement 3 mit seinem flexiblen Übergangsbereich 6 zwischen dem zum Fahrzeugdach 17 parallel verlaufenden fest montierten Bereich 5 und dem bewegbaren Ende 7 je nach Lage des Steuerhebels 10 eine unterschiedlich geformte Bahn. Bei geschlossenem oder auf dem Weg in die Deckel-Öffnungsposition verschobenem Deckel 14 (vgl. Fig 1 und Fig. 4) ist diese Bahn gerade, so daß der Schiebehimmel 1 zwischen der Schiebehimmel-Öffnungsposition und einer durch das Anschlagen an den Mitnehmer 11 bestimmten, in Fig. 1 der Schiebehimmel-Schließposition entsprechenden Lage hin und her verschoben werden kann. Dies erfolgt bei diesem Ausführungsbeispiel mit Hilfe einer nicht dargestellten innenraumseitigen Griffmulde am Schiebehimmel 1 manuell, kann jedoch auch motorisiert ablaufen.

Das dem sichtbaren Teil des Steuerhebels 10 abgewandte Ende des Wasserrinne 8 ist an einem in den Figuren verdeckten Führungsschuh angelenkt, der entlang der Montageschienen 4 verschiebbar ist und einen Teil der Bewegungsmechanik des Deckels 14 bildet. Er ist in senkrechter Richtung unbeweglich. Die nicht auszustellende Kante des Deckels ist ebenfalls entlang der Montageschienen 4 verschieblich, jedoch senkrecht dazu unbeweglich gelagert. Gleiches gilt für die nicht dargestellte vordere Seite des Schiebehimmels 1. Auf diese Einzelheiten wird nicht näher eingegangen, weil sie sich nicht relevant von konventionellen öffnungsfähigen Fahrzeugdächern unterscheiden.

Bei durch Ausstellung des Deckels 14 schräg aufgestelltem Steuerhebel 10 ist der flexible Bereich 6 des Führungselements 3 gekrümmt, wie die Fign. 2 und 3 zeigen. Das bewegbare Ende 7 bleibt dabei gerade, und zwar infolge einer Versteifung durch eine in diesem Bereich auf der dem Steuerhebel 10 abgewandten Seite des Führungselements 3 angebrachten fähnchenartigen Struktur 12. Hierbei handelt es sich um ein mit einer Kunststoffbeschichtung versehenes, vorzugsweise angespritztes Kunststoffteil.

Ein in einigen Figuren erkennbarer Kunststoffabstandhalter 13 ist an dem dem flexiblen Übergangsbereich 6 zugewandten Ende der fähnchenartigen Struktur 12 angebracht und stützt sich bei Aufrichtung des bewegbaren Endes 7 an der Wasserrinne 8 ab. Dadurch wird die Bahn des Führungselements 3 zusätzlich eingestellt und werden außerdem Klappergeräusche durch Anschlagen an die Wasserrinne 8 vermieden.

Das Führungselement 3 ist über den gesamten dargestellten Bereich, also einschließlich der Abschnitte 5, 6 und 7, einstückig ausgebildet. Es handelt sich vorzugsweise um eine mit Kunststoff umspritzte flexible Stahlstange oder Blattfeder, wobei die Befestigung an dem Fahrzeugdach in dem Bereich 5 über ein angespritztes Kunststoffmontageelement erfolgt. Die Metallstange hat einen kreisförmigen Querschnitt, so dass das Führungselement 3 in dem der Führung dienenden Bereich ein balliges, teilweise kreisförmiges Querschnittsprofil aufweist. Alternativ könnte der ballige Führungsbereich auch durch eine Kunststoffbahn gebildet sein, die etwa an eine Metallblattfeder angespritzt ist.

Zusammenfassend zeigen also die Figuren 1, 2 und 3, daß der Deckel den Schiebehimmel 1 bei einer Ausstellbewegung von der Schließposition gemäß Fig. 1 in die Ausstellposition gemäß Fig. 2 mitnimmt und der Schiebehimmel 1 aus der Schiebehimmel-Ausstellposition in Richtung zu der Schiebehimmel-Öffnungsposition verschoben werden kann (von Fig. 2 nach Fig. 3). Die Figur 3 zeigt dabei nicht die vollständige Schiebehimmel-Öffnungsposition, weil dabei die verschiebbare Halterung 2 aus dem abgebildeten Bereich herausbewegt wäre, sondern lediglich eine Zwischenstufe in der Bewegung dorthin, also eine teilgeöffnete Position des Schiebehimmels 1.

Fig. 4 zeigt wiederum im Vergleich zu Fig. 1, wie der Deckel aus der Deckelschließposition in Fig. 1 in Richtung zu der Deckel-Öffnungsposition verschoben werden kann. Dabei wird zunächst der Deckel 14 etwas abgesenkt, um unter dem eigentlichen Fahrzeugdach 17 verschoben werden zu können, was sich an der in Fig. 4 gegenüber Fig. 1 flacheren Stellung des Hebelgestänges 9 erkennen läßt. Außerdem ist der Mitnehmer 11 von dem äußersten Bereich des bewegbaren Endes 7 des Führungselements 3 bereits etwas entfernt. Man erkennt außerdem, daß der Mitnehmer 11 bei dieser Bewegung die Halterung 2 und damit den Schiebehimmel 1 mitnehmen kann, wenngleich in Fig. 4 der Übersichtlichkeit halber keine direkte Anlage zwischen Mitnehmer 11 und Halterung 2 gezeichnet ist. Vielmehr ist in Fig. 4 der Schiebehimmel 1 gegenüber der durch die Deckelposition erzwungenen Position des Schiebehimmels 1 geringfügig weiter in Richtung Schiebehimmel-Öffnungsposition verschoben.

In Fig. 4 erkennt man, daß dort das bewegbare Ende 7 nicht mehr gehalten ist und insbesondere der Mitnehmer 11 bereits den flexiblen Bereich 6 erreicht hat, so daß das bewegbare Ende 7 infolge der Flexibilität des flexiblen Bereichs 6 gegen eine gewisse Elastizität des flexiblen Bereichs 6 frei beweglich ist. Um hierbei Klappergeräusche etwa beim Überfahren von Bodenunebenheiten zu vermeiden, ist zumindest der äußerste Bereich des bewegbaren Endes 7 magnetisch. Vorzugsweise ist die in dem Führungselement 3 enthaltene Stahl-stange magnetisch. Sie wird in abgesenkter Position des Führungselements 3 an einer vorzugsweise als Dauermagnet ausgebildeten Führungselement-Halteeinrichtung 18 gehalten, die an einem in der Montageschiene 4 verschiebbaren Gleiter angeordnet ist und das bewegliche Ende 7 in einer einer langgestreckten geraden Form des gesamten Führungselements 3 entsprechenden Position festhalten kann.

Andererseits kann die Antriebsmechanik 9 des Deckels die durch die Führungselement-Halteeinrichtung 18 auf das bewegbare Ende 7 ausgeübten Kräfte ohne weiteres überwinden und damit die in den Figuren 2 und 3 dargestellten Positionen erreichen.

### Bezugszeichenliste

- 1: Schiebehimmel
- 2: Halterung
- 3: Führungselement
- 4: Montageschienen
- 5: Bereich von 3 (fest montiert)
- 6: Übergangsbereich von 3 (flexibel)
- 7: Ende von 3 (bewegliches)
- 8: Wasserrinne
- 9: Hebelmechanik
- 10: Steuerhebel
- 11: Mitnehmer
- 12: Struktur
- 13: Kunststoffabstandshalter
- 14: Deckel
- 15: Dachöffnung
- 16: Lüftungsspalt
- 17: Fahrzeugdach
- 18: Führungselement-Halteeinrichtung

## Patentansprüche

1. Öffnungsfähiges Fahrzeugdach
mit wenigstens einem eine Dachöffnung (15) verschließenden Deckel (14), der aus einer Deckel-Schließposition in eine Deckel-Ausstellposition ausstellbar ist,
und einem unter dem Deckel (14) angeordneten Schiebehimmel (1), der aus einer Schiebehimmel-Schließposition bei einem Ausstellen des Dekkels (14) mit diesem in eine Schiebehimmel-Ausstellposition mitbewegt werden kann, so daß der Deckel (14) und der Schiebehimmel (1) gemeinsam einen Lüftungsspalt (16) freigeben können,
wobei der Schiebehimmel (1) ferner aus der Schiebehimmel-Schließposition in eine Schiebehimmel-Öffnungsposition verschoben werden kann, so daß der Schiebehimmel (1) den Deckel (14) bzw. die Dachöffnung (15) zumindest zu einem großen Teil freigeben kann, und
wobei der Schiebehimmel (1) an derjenigen Seite, an der er in der Schiebehimmel-Ausstellposition den Lüftungsspalt (16) freigeben kann, mit einer verschiebbaren Halterung (2) an einem langgestreckten Führungselement (3) gehalten ist, entlang dem der Schiebehimmel (1) aus der und in die Schiebehimmel-Öffnungsposition verschiebbar ist, das an einem Ende (7), an dem der Schiebehimmel (1) in der Schiebehimmelschließposition und in der Schiebehimmelausstellposition gehalten ist, bei der Bewegung des Schiebehimmels (1) zwischen diesen Positionen mitbewegt wird und das in einem von diesem Ende (7) entfernten Bereich (5), durch den oder in den die Halterung (2) bei der Bewegung in die Schiebehimmel-Öffnungsposition verschoben wird, in einer zu dem Dach senkrechten Richtung und in Bezug auf das Dach unbeweglich gehalten ist,
**dadurch gekennzeichnet, dass** das Führungselement (3) zumindest in einem Übergangsbereich (6) zwischen dem unbeweglich gehaltenen Bereich (5) und dem beweglichen Ende (7) flexibel ist.

2. Öffnungsfähiges Fahrzeugdach nach Anspruch 1,
**dadurch gekennzeichnet, dass** das Führungselement (3) in den von der verschiebbaren Halterung (2) erfaßbaren Bereichen (5, 6, 7) einstückig ausgebildet ist.

3. Öffnungsfähiges Fahrzeugdach nach einem der vorhergehenden Ansprüche,
**dadurch gekennzeichnet, dass** eine Führungsbahn des Führungselements (3) ein balliges Querschnittsprofil aufweist.

4. Öffnungsfähiges Fahrzeugdach nach einem der vorhergehenden Ansprüche,
**dadurch gekennzeichnet, dass** zumindest der Übergangsbereich (6) des Führungselements (3) von einer flexiblen Metallstange oder von einer metallenen Blattfeder gebildet wird.

5. Öffnungsfähiges Fahrzeugdach nach einem der Ansprüche 1 bis 4,
**dadurch gekennzeichnet, dass** das Führungselement (3) kunststoffbeschichtet ist.

6. Öffnungsfähiges Fahrzeugdach nach einem der vorhergehenden Ansprüche,
**dadurch gekennzeichnet, dass** das bewegbare Ende (7) des Führungselements (3) über einen Längenabschnitt (12) versteift ist.

7. Öffnungsfähiges Fahrzeugdach nach einem der vorhergehenden Ansprüche,
**dadurch gekennzeichnet, dass** der Deckel (14) in eine Deckel-Öffnungsposition bewegbar ist, in der er einen großen Teil der Dachöffnung (15) freigibt und den Schiebehimmel (1) über einen an dem Führungselement (3) geführten und bei einer Bewegung in die Dachöffnungsposition an die verschiebbare Halterung (2) anschlagenden Mitnehmer (11) in die Schiebehimmel-Öffnungsposition mitnimmt.

8. Öffnungsfähiges Fahrzeugdach nach Anspruch 7,
**dadurch gekennzeichnet, dass** der Mitnehmer (11) mit einer Einrichtung (9) zum Ausstellen des Deckels (14) gekoppelt ist und das bewegliche Ende (7) des Führungselements (3) bei einer Bewegung des Deckels (14) in die Deckel-Ausstellposition mitnimmt.

9. Öffnungsfähiges Fahrzeugdach nach Anspruch 7 oder 8,
**dadurch gekennzeichnet, dass** der Mitnehmer (11) an einem mit der Einrichtung (9) zum Ausstellen des Deckels (14) gekoppelten Steuerhebel (10) einer Wasserrinne (8) befestigt ist.

10. Öffnungsfähiges Fahrzeugdach nach einem der vorhergehenden Ansprüche,
**dadurch gekennzeichnet, dass** eine dachfest angeordnete Führungselement-Halteeinrichtung (18) zum Halten des beweglichen Endes des Führungselements (3) vorgesehen ist.

11. Öffnungsfähiges Fahrzeugdach nach Anspruch 10,
**dadurch gekennzeichnet, dass** die Führungselement-Halteeinrichtung (18) von einem Magneten gebildet ist und das bewegliche Ende (7) des Führungselements (3) zumindest teilweise magnetisch ausgebildet ist.

## Claims

1. Openable vehicle roof
having at least one panel (14) which closes a roof opening (15) and which can be raised from a closed panel position into a raised panel position,
and a sliding headliner (1) which is arranged under the panel (14) and, when the panel (14) is raised, can be moved along with the latter from a closed sliding headliner position into a raised sliding headliner position, so that the panel (14) and the sliding headliner (1) can jointly expose a ventilation gap (16),
it being possible for the sliding headliner (1) also to be slid from the closed sliding headliner position into an open sliding headliner position, so that the sliding headliner (1) can expose the panel (14) and the roof opening (15), at least for a large part, and
on that side on which the sliding headliner (1) can expose the ventilation gap (16) in the raised sliding headliner position, it being held by a displaceable holder (2) on an elongated guide element (3), along which the sliding headliner (1) can be slid out of and into the open sliding headliner position, which element, at one end (7), at which the sliding headliner (1) is held in the closed sliding headliner position and in the raised sliding headliner position, is also moved between these positions during the movement of the sliding headliner (1) and which element, in a region (5) remote from this end (7), by which or in which the holder (2) is displaced during the movement into the open sliding headliner position, is held immovably in a direction at right angles to the roof and in relation to the roof,
**characterized in that** the guide element (3) is flexible, at least in a transition region (6) between the immovably held region (5) and the movable end (7).

2. Openable vehicle roof according to Claim 1, **characterized in that** the guide element (3) is formed in one piece in the regions (5, 6, 7) that can be covered by the displaceable holder (2).

3. Openable vehicle roof according to one of the preceding claims, **characterized in that** a guide track of the guide element (3) has a convex cross-sectional profile.

4. Openable vehicle roof according to one of the preceding claims, **characterized in that** at least the transition region (6) of the guide element (3) is formed by a flexible metal rod or by a metallic leaf spring.

5. Openable vehicle roof according to one of Claims 1 to 4, **characterized in that** the guide element (3) is plastic coated.

6. Openable vehicle roof according to one of the preceding claims, **characterized in that** the movable end (7) of the guide element (3) is stiffened over a lengthwise section (12).

7. Openable vehicle roof according to one of the preceding claims, **characterized in that** the panel (14) can be moved into an open panel position, in which it exposes a large part of the roof opening (15) and carries along the sliding headliner (1) with it into the open sliding headliner position via a driver (11) which is guided on the guide element (3) and strikes the displaceable holder (2) during a movement into the open roof position.

8. Openable vehicle roof according to Claim 7, **characterized in that** the driver (11) is coupled to a device (9) for raising the panel (14) and carries along the movable end (7) of the guide element (3) with it during the movement of the panel (14) into the raised panel position.

9. Openable vehicle roof according to Claim 7 or 8, **characterized in that** the driver (11) is fixed to a control lever (10) of a water channel (8), which lever is coupled to the device (9) for raising the panel (14).

10. Openable vehicle roof according to one of the preceding claims, **characterized in that** a guide element holding device (18) arranged fixed to the roof is provided to hold the movable end of the guide element (3).

11. Openable vehicle roof according to Claim 10, **characterized in that** the guide element holding device (18) is formed by a magnet, and the movable end (7) of the guide element (3) is at least partly magnetic.

## Revendications

1. Toit ouvrant de véhicule
avec au moins un panneau (14) fermant une ouverture de toit (15), qui peut être déplacé d'une position fermée de panneau dans une position relevée de panneau,
et avec un plafond coulissant (1) qui est disposé en dessous du panneau (14) et qui, à partir d'une position fermée de plafond coulissant, peut lors d'un relevage du panneau (14) être déplacé conjointement avec ce dernier dans une position relevée de plafond coulissant, de sorte que le panneau (14) et le plafond coulissant (1) peuvent conjointement dégager un passage de ventilation (16),
sachant que le plafond coulissant (1) peut être en outre déplacé de la position fermée de plafond coulissant dans une position ouverte de plafond coulissant, de sorte que le plafond coulissant (1) peut dégager au moins en grande partie le panneau (14) ou encore l'ouverture de toit (15),
et sachant que le plafond coulissant (1), sur le côté sur lequel il peut dégager le passage de ventilation (16) dans la position relevée de plafond coulissant, est maintenu par un organe de maintien mobile (2) sur un élément de guidage oblong (3) le long duquel le plafond coulissant (1) peut être déplacé depuis la position ouverte de plafond coulissant et vers cette position, élément qui, par une extrémité (7) où le plafond coulissant (1) est maintenu dans la position fermée de plafond coulissant et dans la position relevée de plafond coulissant, est conjointement déplacé lors du déplacement du plafond coulissant (1) entre ces positions, et élément qui, dans une région (5) éloignée de cette extrémité (7), à travers laquelle ou dans laquelle l'organe de maintien (2) est déplacé lors du déplacement dans la position ouverte de plafond coulissant, est maintenu immobile dans une direction perpendiculaire au toit et par rapport au toit,
**caractérisé en ce que** l'élément de guidage (3) est flexible au moins dans une région de transition (6) entre la région (5) maintenue immobile et l'extrémité mobile (7).

2. Toit ouvrant de véhicule selon la revendication 1, **caractérisé en ce que** l'élément de guidage (3) est réalisé d'un seul tenant dans les régions (5, 6, 7) dans les régions pouvant être engagées par l'organe de maintien mobile (2).

3. Toit ouvrant de véhicule selon l'une des revendications précédentes, **caractérisé en ce qu'**une voie de guidage de l'élément de guidage (3) présente un profil de section convexe.

4. Toit ouvrant de véhicule selon l'une des revendications précédentes, **caractérisé en ce qu'**au moins la région de transition (6) de l'élément de guidage (3) est formé par une tige métallique flexible ou par un ressort à lame métallique.

5. Toit ouvrant de véhicule selon l'une des revendications 1 à 4, **caractérisé en ce que** l'élément de guidage (3) est revêtu de matière plastique.

6. Toit ouvrant de véhicule selon l'une des revendications précédentes, **caractérisé en ce que** l'extrémité mobile (7) de l'élément de guidage (3) est renforcée sur une partie (12) de sa longueur.

7. Toit ouvrant de véhicule selon l'une des revendications précédentes, **caractérisé en ce que** le panneau (14) peut être déplacé dans une position ouverte de panneau dans laquelle il dégage une grande partie de l'ouverture de toit (15), et il entraîne avec lui le plafond coulissant (1) dans la position ouverte de plafond coulissant par l'intermédiaire d'un entraîneur (11) guidé sur l'élément de guidage (3) et venant buter contre l'organe de maintien mobile (2) lors d'un déplacement dans la position ouverte de panneau.

8. Toit ouvrant de véhicule selon la revendication 7, **caractérisé en ce que** l'entraîneur (11) est couplé à un mécanisme (9) pour relever le panneau (14), et entraîne avec lui l'extrémité mobile (7) de l'élément de guidage (3) lors d'un déplacement du panneau (14) dans la position relevée de panneau.

9. Toit ouvrant de véhicule selon la revendication 7 ou 8, **caractérisé en ce que** l'entraîneur (11) est fixé sur un levier de commande (10) d'une gouttière de toit (8) qui est couplé au mécanisme (9) pour relever le panneau (14).

10. Toit ouvrant de véhicule selon l'une des revendications précédentes, **caractérisé en ce qu'**un organe de maintien (18) d'élément de guidage, solidaire du toit, est prévu pour maintenir l'extrémité mobile de l'élément de guidage (3).

11. Toit ouvrant de véhicule selon la revendication 10, **caractérisé en ce que** l'organe de maintien (18) d'élément de guidage est formé par un aimant, et l'extrémité mobile (7) de l'élément de guidage (3) est réalisée au moins partiellement magnétique.
